# EUROPEAN PATENT APPLICATION

(11) **EP 4 851 441 A1**
(43) Date of publication of application: **09.12.2026**
(21) Application number: 26183579.7
(22) Date of filing: 08.06.2026
(51) Int. Cl.: F02C 7/20, B64D 27/18, B64D 27/40, F01D 25/28

(54) **GAS TURBINE ENGINE AIRCRAFT MOUNTING SYSTEM**

(30) Priority: 06.06.2025 US 202519231080
(71) Applicant: RTX Corporation, Farmington, CT 06032 (US)
(72) Inventor: BREAULT, Andrew E., Bolton, 06043 (US); YAZICI, Murat, Glastonbury, 06033 (US)
(74) Representative: Dehns

(57) **Abstract**

An aircraft system is provided that includes a pylon (26), a gas turbine engine (28), a forward mount (58A), an aft mount (58B), and a thrust link (62). The gas turbine engine (28) includes a fan section (36) with a fan case (60) and a turbine exhaust case, TEC (48). The fan case (60) defines a portion of a bypass air path (54). The gas turbine engine (28) has an axially extending engine centerline (30). The forward mount (58A) is engaged with the fan case (60) and the pylon (26). The forward mount (58A) has a forward mount centerline (74). The aft mount (58B) is engaged with the TEC (48) and the pylon (26). The thrust link (62) extends between the aft mount (58B) and the gas turbine engine (28) along a thrust link centerline (64). The thrust link (62) is orientated such that a thrust link vector directed along the thrust link centerline (64) intersects with the forward mount centerline (74) at an intersection point (68) that is located below the engine centerline (30).

## Description

### BACKGROUND OF THE INVENTION

### 1. Technical Field

The present invention relates to aircraft in general and to mounting systems for an aircraft propulsion system in particular.

### 2. Background Information

Various propulsion systems may be used to power an aircraft. Each of these propulsion systems must be attached to the aircraft in some manner. Very often, a propulsion system may include a gas turbine engine that is housed within a nacelle. The nacelle and the gas turbine engine may be attached to the wing of an aircraft via a pylon. While propulsion system mounting systems are known, there is still room in the art for improvement.

### SUMMARY

An aircraft system is provided that includes a pylon, a gas turbine engine, a forward mount, an aft mount, and a thrust link. The gas turbine engine comprises a fan section with a fan case and a turbine exhaust case (TEC). The fan case defines a portion of a bypass air path. The gas turbine engine has an axially extending engine centerline. The forward mount is engaged with the fan case and the pylon along a forward mount plane. The aft mount is engaged with the TEC and the pylon along an aft mount plane. The thrust link extends between the aft mount and the gas turbine engine along a thrust link centerline. The thrust link is oriented such that a thrust link vector directed along the thrust link centerline intersects with the forward mount plane at an intersection point that is located below the engine centerline.

Optionally, and in accordance with the above, the forward mount plane may be oriented so that the forward mount plane extends vertically.

Optionally, and in accordance with any of the above, the gas turbine engine may be a geared turbofan engine that includes a fan drive gear system.

Optionally, and in accordance with any of the above, the fan drive gear system may be located forward of the intersection point.

Optionally, and in accordance with any of the above, the fan section may have an outer radial fan diameter of about one hundred and ten inches (2.79 m) or less.

Optionally, and in accordance with any of the above, the thrust link may extend between the aft mount and an intermediate case of the gas turbine engine.

Optionally, and in accordance with any of the above, the forward mount may be oriented so that the forward mount plane is tilted by an acute angle relative to a vertical line extending through the forward mount.

Optionally, and in accordance with any of the above, the gas turbine engine may be a geared turbofan engine that includes a fan drive gear system (FDGS), and a FDGS centerline is located at or aft of the intersection point.

According to another aspect of the present invention, an aircraft system is provided that comprises a pylon, a gas turbine engine, a forward mount, an aft mount, and a thrust link. The gas turbine engine comprise an axially extending engine centerline, a fan section, a turbine exhaust case (TEC), and a fan drive gear system (FDGS). The fan section has a fan case and a fan outer radial diameter value. The forward mount is engaged with the fan case and the pylon, and the forward mount has a forward mount plane. The aft mount (AM) is engaged with the TEC and the pylon. The aft mount is separated from the engine centerline by an AM radial distance value, and the aft mount is separated from the forward mount by a mount separation distance value. The FDGS includes a center of gravity (CG) and the FDGS CG is located forward of the forward mount plane by an FDGS axial distance value. The thrust link extends between the aft mount and the gas turbine engine along a thrust link centerline. The thrust link is orientated such that a thrust link vector directed along the thrust link centerline intersects with the forward mount plane at an intersection point. The system is configured such that when a parameter value "P" is determined using the mount separation distance value, the fan outer radial diameter value, the FDGS axial distance value, and the AM radial distance value, and an expression: $P = \left(\frac{B}{A}\right) ∗ \left(\frac{- C}{D}\right)$ wherein within the expression, "B" represents the fan outer radial diameter value, "A" represents the mount separation distance value, "C" represents the FDGS axial distance value, and "D" represents the AM radial distance value, the determined value for "P" is less than zero.

Optionally, and in accordance with the above, the intersection point may be located below the engine centerline.

Optionally, and in accordance with any of the above, the determined value for "P" may have a value that is in the range of -1.0 to -0.4.

According to an aspect of the present invention, an aircraft system is provided that comprises a pylon, a gas turbine engine, a forward mount, an aft mount, and a thrust link. The gas turbine engine comprises an axially extending engine centerline, a fan section, a turbine exhaust case (TEC), and a fan drive gear system (FDGS). The fan section has a fan case and a fan outer radial diameter value. The forward mount is engaged with the fan case and the pylon. The forward mount has a forward mount plane that is tilted from a vertical line that extends through the forward mount and is perpendicular to the engine centerline. The aft mount (AM) is engaged with the TEC and the pylon. The aft mount is separated from the engine centerline by an AM radial distance value, and the aft mount is separated from the forward mount by a mount separation distance value. The FDGS includes a center of gravity (CG) and the FDGS CG is located forward of the forward mount by an FDGS axial distance value. The thrust link extends between the aft mount and the gas turbine engine along a thrust link centerline. The thrust link is orientated such that a thrust link vector directed along the thrust link centerline intersects with the forward mount plane at an intersection point. A vertical line extending through the intersection point is separated from the vertical line extending through the forward mount by a mount-intersection point axial distance value. The system is configured such that when a parameter value "P2" is determined using the mount separation distance value, the fan outer radial diameter value, the FDGS axial distance value, the AM radial distance value, the mount-intersection point axial distance value and an expression: $P 2 = \left(\frac{B}{\left(A-\left(-E\right)\right)}\right) ∗ \left(\frac{- C}{D}\right)$ wherein within the expression, "B" represents the fan outer radial diameter value, "A" represents the mount separation distance value, "C" represents the FDGS axial distance value, "D" represents the AM radial distance value, "E" represents the mount-intersection point axial distance value, the determined value for "P2" is less than zero.

Optionally, and in accordance with the above, the intersection point may be located forward of the FDGS CG.

Optionally, and in accordance with any of the above, the determined value for "P2" has a value that is in the range of -1.0 to -0.4.

Optionally, and in accordance with any of the above, the FDGS may have a gear ratio that is at or above 2.8.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

FIG. 1 is a diagrammatic frontal view of an aircraft.
FIG. 2 is a diagrammatic sectional view of a gas turbine engine embodiment.
FIG. 3 is a diagrammatic view of a gas turbine engine mounted on an aircraft pylon, illustrating a thrust link vector intersection point disposed above the axial centerline of the gas turbine engine.
FIG. 4 is a diagrammatic view of a gas turbine engine mounted on an aircraft pylon, illustrating a thrust link vector intersection point disposed below the axial centerline of the gas turbine engine.
FIG. 5 is a diagrammatic view of a geared turbofan gas turbine engine mounted on an aircraft pylon, illustrating a thrust link vector intersection point disposed above the axial centerline of the gas turbine engine.
FIG. 6 is a diagrammatic view of a geared turbofan gas turbine engine mounted on an aircraft pylon, illustrating a thrust link vector intersection point disposed above the axial centerline of the gas turbine engine and a forward mount with a tilted mount plane.

### DETAILED DESCRIPTION

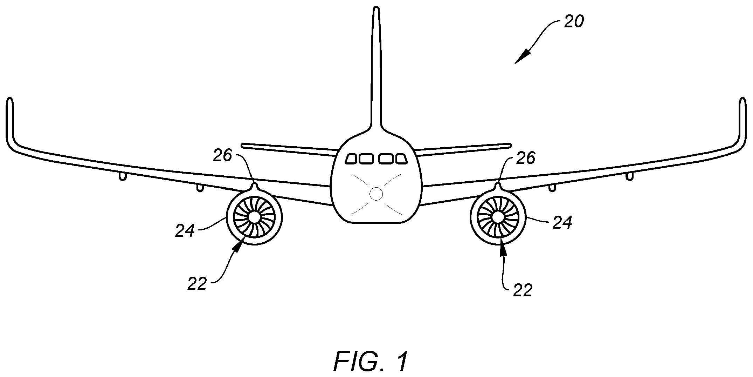

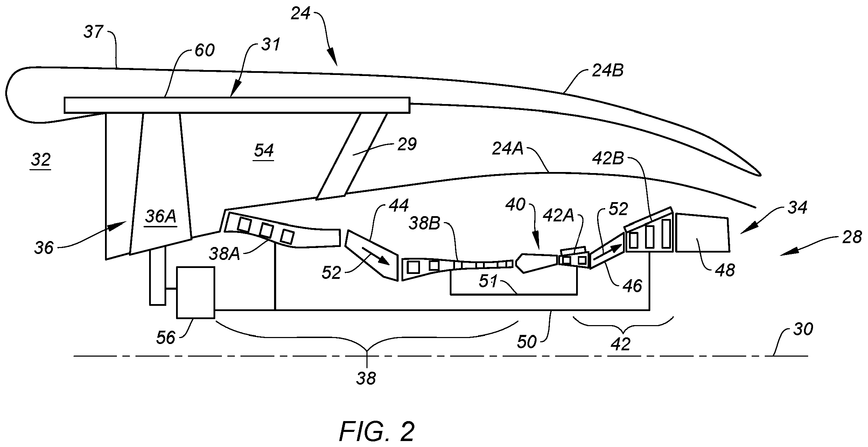

FIG. 1 illustrates an aircraft 20 having a pair of propulsion systems 22, each mounted in a nacelle 24 connected to a respective wing by a pylon 26. The propulsion system 22 may include a gas turbine engine (see FIG. 2), or a hybrid electric propulsion (HEP) system, or the like.

FIG. 2 shows a diagrammatic view of a gas turbine engine 28 disposed within a nacelle 24. The nacelle includes an inner nacelle structure 24A and an outer nacelle structure 24B. In some embodiments, a fan exit guide vane ("FEGV 29") may extend between an inner wall structure of the inner nacelle structure 24A and an engine outer case structure 31 that includes a fan case 60. The FEGV 29 extends across a fan bypass air path 54.

The gas turbine engine 28 extends along an axial centerline 30 between an upstream airflow inlet 32 and a downstream exhaust 34. The gas turbine engine 28 includes a fan section 36, a compressor section 38, a combustion section 40, and a turbine section 42. The fan section 36 includes a plurality of fan blades 36A that collectively define an outer radial fan diameter. The fan case 60 is disposed radially outboard of, extends axially along and may circumscribe the fan section 36 and its plurality of fan blades 36A. The fan case 60 may thereby house and may be configured as a containment structure for the fan section 36 and its plurality of fan blades 36A. The fan cowl 37, and more generally, the outer nacelle structure 24B is configured to provide an aerodynamic cover over the fan case 60. The compressor section 38 includes a low-pressure compressor (LPC 38A) and a high-pressure compressor (HPC 38B). The turbine section 42 includes a high-pressure turbine (HPT 42A) and a low-pressure turbine (LPT 42B). The engine sections are arranged sequentially along the centerline 30 within an engine housing; e.g., the LPC 38A, an intermediate case 44, the HPC 38B, the combustion section 40, the HPT 42A, the mid-turbine frame 46, the LPT 42B, and the turbine exhaust case (TEC 48) form the core of the engine 28. The LPC 38A is connected to and driven by the LPT 42B through a low-speed shaft 50. The HPC 38B is connected to and driven by the HPT 42A through a high-speed shaft 51.

In the gas turbine embodiment shown in FIG. 2, a fan drive gear system ("FDGS 56") is diagrammatically shown in communication with the low-speed shaft 50 and with the fan section 36. The FDGS 56 may be configured to accept a rotational drive input (e.g., from the low-speed shaft 50) at a given rotational speed (RS_{INPUT}) and torque (T_{INPUT}) and to produce an output rotational drive at a given rotational speed (RS_{OUTPUT}) and torque (T_{OUTPUT}) for the fan section 36. The present invention does not require an FDGS 56. In those engine embodiments that include an FDGS 56, the present invention is not limited to any particular FDGS configuration and does not require the FDGS 56 being driven by the low-speed shaft 50.

Air entering the gas turbine engine 28 through the airflow inlet 32 is bisected between a core gas path 52 and a fan bypass air path 54. A portion of the air entering the gas turbine engine 28 passes through the fan section 36 and enters the core gas path 52. The core gas path 52 extends through the core of the engine; i.e., through the LPC 38A, the intermediate case 44, the HPC 38B, the combustion section 40, the HPT 42A, the mid-turbine frame 46, the LPT 42B, and the TEC 48. Core gas exiting the LPT 42B exits the engine 28 via the exhaust 34. The remainder of the air entering the gas turbine engine 28 passes through the fan section 36 and enters the fan bypass air path 54 which is disposed radially outside of the core of the engine 28.

The gas turbine engine 28 configuration diagrammatically shown in FIG. 2 is an example provided to facilitate the description herein. The present invention may be implemented in a variety of different gas turbine engine 28 configurations and is not therefore limited to the gas turbine engine 28 configuration diagrammatically shown in FIG. 2.

The terms "forward" and "aft" are used herein to indicate the relative position of a component or surface. In a conventional axial engine 28 such as that shown in FIG. 2, the fan section 36 is forward of the compressor section 38 and the turbine section 42 is aft of the compressor section 38. The terms "inner radial" and "outer radial" refer to relative radial positions from the engine centerline 30. An inner radial component or path is disposed radially closer to the engine centerline 30 than an outer radial component or path.

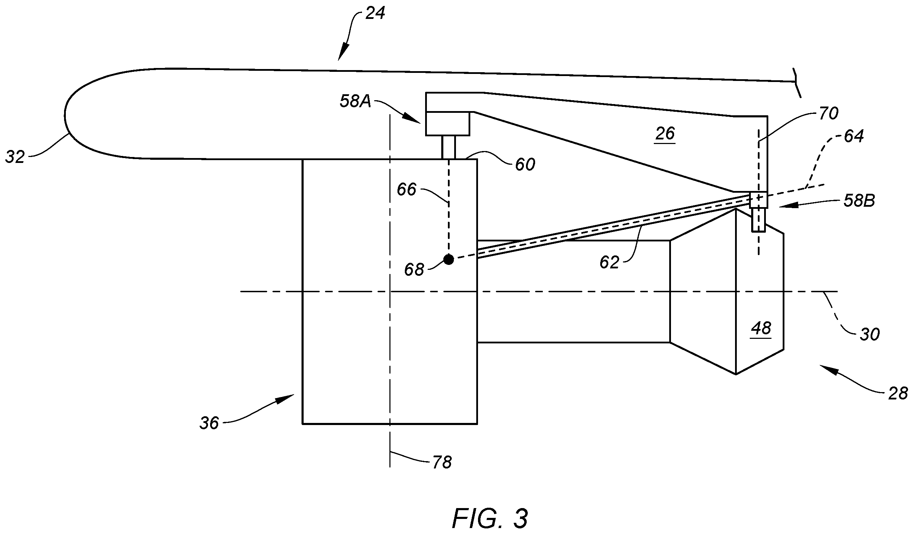

As disclosed herein and shown in FIG. 1, the gas turbine engine 28 is housed within a nacelle 24, and both the gas turbine engine 28 and the nacelle 24 are structurally connected to an aircraft wing via the pylon 26. Referring to FIG. 3, the gas turbine engine 28 is structurally connected to a pylon 26 by a forward mount 58A and an aft mount 58B. The forward and aft mounts 58A, 58B typically extend between the engine 28 and the pylon 26. Each of the forward and aft mounts 58A, 58B may (e.g., via a linkage not shown) be configured to accommodate a vertical load (i.e., a gravitational load acting along a gravitational vector) and a lateral load. In some embodiments, the mounts 58A, 58B may also be configured to accommodate a torque loading. The present invention is not limited to using any particular forward or aft mount 58A, 58B configuration. The forward mount 58A may be located at a fan case 60 surrounding the fan section 36 of the engine 28. The aft mount 58B is located aft of the forward mount 58A, typically in or adjacent the turbine section 42. For example, in some embodiments the aft mount 58B may be located at the TEC 48. As another example, in some embodiments the aft mount 58B may be located at the mid-turbine frame 46. The present invention is not limited to the aft mount 58B being positioned at the TEC 48 or at the mid-turbine frame 46. Analysis to date, however, suggests that positioning the aft mount 58B at the TEC 48 is beneficial in many applications. To facilitate the description herein, the aft mount 58B will be described as being positioned at the TEC 48 but is not limited thereto.

In some embodiments, thrust links 62 may be included that extend between the aft mount 58B and the engine 28; e.g., at the intermediate case 44 - see FIG. 2. Each thrust link 62 extends along its own axially extending thrust link centerline 64. Thrust forces translating through a thrust link 62 during operation of the engine 28 may be represented as a thrust link vector that extends along the thrust link centerline 64. As can be seen in FIG. 3, the thrust link vector intersects with a line 66 that represents a forward mount plane of the forward mount. The forward mount plane reflects the linkage connecting the engine 28 and the pylon 26 to one another and the load path (e.g., gravitational load) therethrough. Line 66 is projected vertically downward from the forward mount 58A to an intersection point 68. In many existing aircraft applications, the intersection point 68 between the thrust link vector and the line 66 extending vertically downward from the forward mount 58A is disposed above the axial centerline 30 of the engine 28.

The engine core will experience natural, static backbone bending (e.g., a gravitational load that causes bending) when the engine 28 is secured at a forward mount 58A and at an aft mount 58B. When the center of gravity ("CG") of the fan section 36 is disposed forward of the forward mount 58A, the mass of the fan section 36 creates a moment around the forward mount 58A thereby affecting the bending load acting on the engine core. In addition, fan thrust can be approximated as acting through the fan section 36 centerline. When the intersection point 68 between the thrust link vector and the line 66 extending vertically from the forward mount 58A is disposed above the engine centerline 30, the engine core may be subject to additional bending loads due to the moment arm between the fan section centerline 78 and the intersection point 68.

As will be detailed herein, aspects of the present invention provide a means for evaluating the significance of the intersection point 68 location relative to the engine axial centerline 30, and a means for mitigating the engine core bending load.

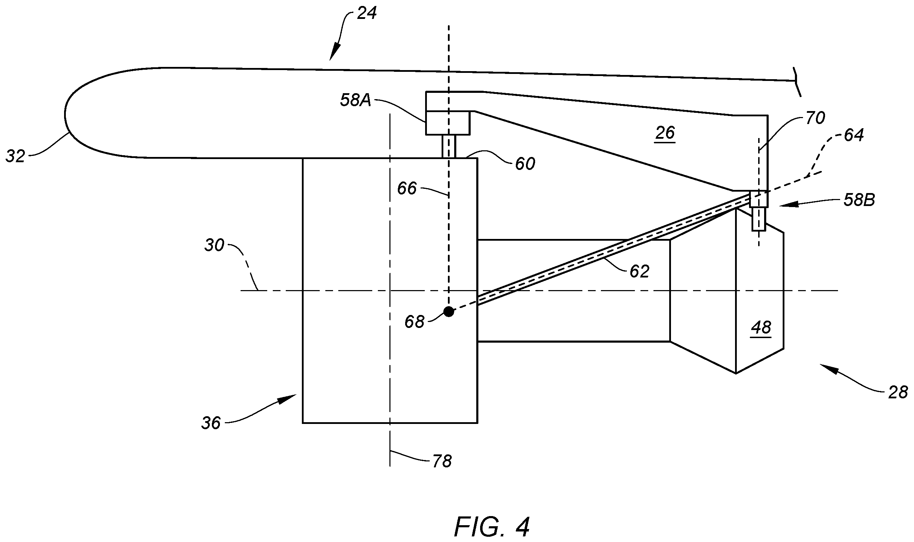

Referring to FIG. 4, a gas turbine engine 28 is diagrammatically illustrated that is connected to the pylon 26 by a forward mount 58A disposed at the fan case 60 and an aft mount 58B disposed at the TEC 48. In this embodiment, thrust links 62 are included that extend along thrust link centerline 64 between the aft mount 58B and the engine 28; e.g., extending to the intermediate case 44 - See FIG. 2. The aft mount 58B may be described as having a vertically extending centerline 70. The line 70 extending vertically through the aft mount 58B may be described as being disposed within an aft mount plane and being aligned with a gravitational vector. Thrust forces translating through the thrust links 62 during operation of the engine 28 may be represented as thrust link vectors. In this embodiment, the thrust links 62 are oriented so that the thrust link vectors intersect with a vertical line 66 that extends through the forward mount 58A. The intersection point 68 is located below the axial centerline 30 of the engine 28. The phrase "below the axial centerline 30 of the engine 28" is used herein to refer to the side of the axial centerline 30 of the engine 28 opposite the side of the centerline 30 where the forward and aft mounts 58A, 58B are engaged with the engine 28. The position of the intersection point 68 (below the engine axial centerline 30) creates a moment arm between the fan section centerline 78 and the intersection point 68 that counteracts the gravitational bending load on the engine core. The degree to which the moment counteracts the gravitational bending load may be varied by moving the position of the intersection point 68. In this embodiment, thrust produced by the fan during operation of the engine 28 acts through the engine centerline 30 and will counter the gravitational / bending load acting on the engine core. The present invention does not require any particular configuration for the forward mount 58A or the aft mount 58B; e.g., torque may be reacted by the forward mount 58A or the aft mount 58B.

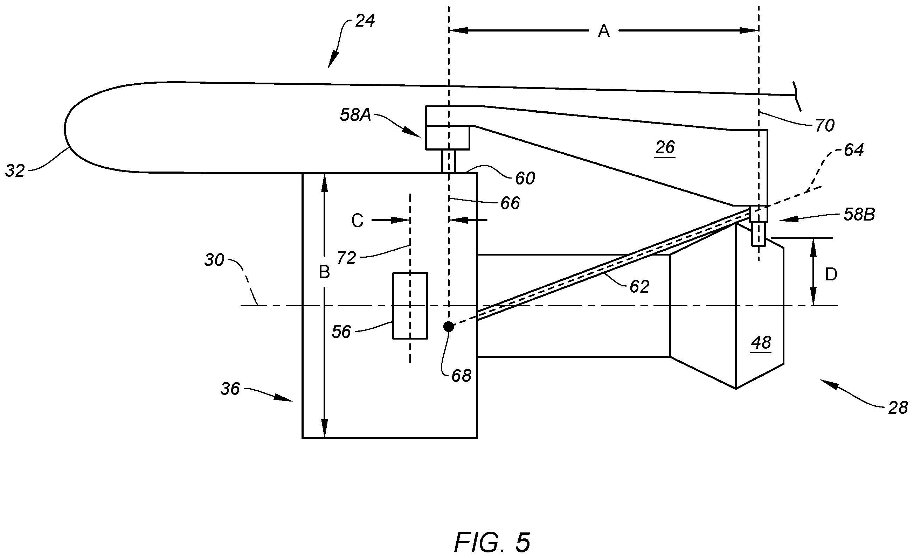

Referring to FIG. 5, a gas turbine engine 28 is diagrammatically illustrated that is connected to the pylon 26 by a forward mount 58A disposed at the fan case 60 and an aft mount 58B disposed at the TEC 48. This embodiment is configured like the embodiment shown in FIG. 4 (e.g., with thrust link vectors that intersect with a line 66 extending vertically through the forward mount 58A at a point that is below the axial centerline 30 of the engine 28) except that the gas turbine engine 28 is configured as a geared turbofan and includes an FDGS 56. The weight and position of the FDGS 56 can significantly affect the center of gravity ("CG") of the fan section 36 (e.g., move the fan section CG forward) and consequently affect the bending load acting on the engine core.

As stated above, the present invention stems from the discovery that a bending load acting on an engine core can be mitigated by particular mounting considerations of the engine 28 vis-à-vis the pylon 26. For example, the bending load acting on the engine core may be mitigated by a mounting system in which the intersection point 68 (between the thrust link vectors and a vertical line 66 passing through the forward mount 58A) approaches or is at the axial centerline 30 of the engine 28. Current analysis indicates that an intersection point 68 (between the thrust link vectors and the vertical line 66 passing through the forward mount 58A) that is disposed below the axial centerline 30 of the engine 28 may provide more substantial bending load benefits. An intersection point 68 disposed below the axial centerline 30 of the engine 28 is understood to be particularly beneficial for geared turbofan engines that utilize an FDGS 56 disposed axially forward of the forward mount 58A.

The following examples illustrate two present invention engine 28 mounting configurations that are understood to provide the aforesaid benefits. In a first example (which may be referred to as a "vertical fan mount plane" - see FIG. 5), the intersection point 68 is aligned with the vertical line 66 passing through the forward mount 58A (i.e., the forward mount plane). The vertical centerline 72 of the FDGS 56 is disposed forward of the intersection point 68.

An intersection point 68 utilized in this engine 28 mounting configuration may be evaluated in terms of a parameter "P" that takes into consideration relevant physical dimensions of the engine 28. The following algorithmic expression is an example of how the parameter may be determined: $P = \left(\frac{B}{A}\right) ∗ \left(\frac{- C}{D}\right)$ The reference letter "P" refers to the parameter value. Referring to FIG. 5, the reference letter "B" refers to the outer radial diameter of the fan section 36. The reference letter "A" refers to the axial distance between the forward mount 58A and the aft mount 58B. The specific axial position of the forward mount 58A and the specific axial position of the aft mount 58B used to define the axial distance may be arbitrarily defined; e.g., the axial distance "A" may be between the vertical lines 66, 70 associated with the respective connection points between the mounts 58A, 58B and the engine 28, or the like. The reference letter "C" refers to the axial distance between the vertical line 66 extending through the forward mount 58A and the vertical line 72 extending through the CG of the FDGS 56. This distance may also be referred to as the "FDGS axial distance" and is assigned a negative sign convention. The reference letter "D" refers to the radius of the aft mount 58B; e.g., the radial distance between the engine centerline 30 and the point on the TEC 48 where the aft mount 58B connects with the TEC 48.

Analysis indicates that intersection points 68 disposed below the axial centerline 30 of the engine 28 that provide desirable loading benefits may have a parameter value "P" that is less than zero. The analysis also indicates that parameter "P" values that are in the range of about negative one to about negative four-tenths (i.e., P in the range of about -1.0 to about -0.4) provide more appreciable loading benefits, and that intersection points 68 disposed below the axial centerline 30 of the engine 28 provide desirable loading benefits for turbofan engines having an outer radial fan diameter of about one hundred and ten inches (2.79 m) or less.

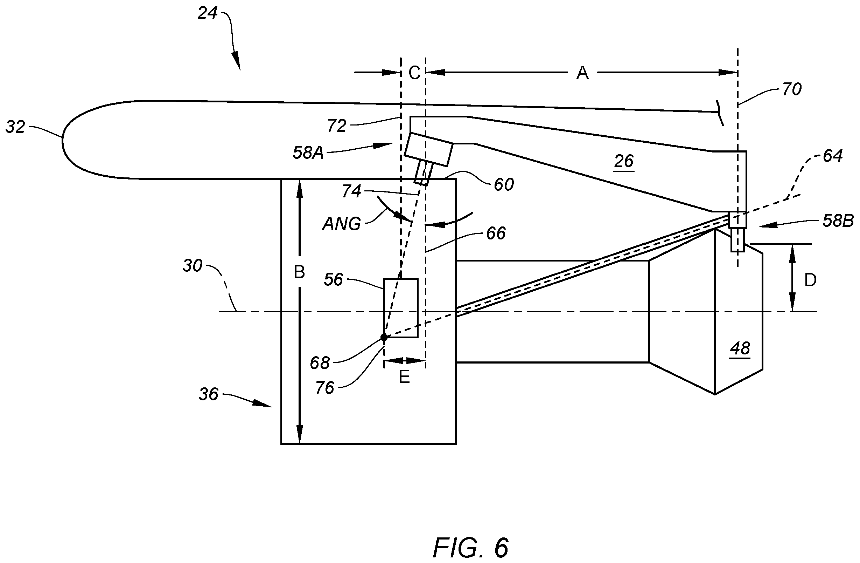

In a second example (which may be referred to as a "tilted fan mount plane" - see FIG. 6), the mount plane (represented by line 74) of the forward mount 58A is tilted away from a vertical orientation. As indicated herein, the forward mount plane reflects the linkage connecting the engine 28 and the pylon 26 and the load path therethrough. The orientation of forward mount plane 74 may also be described as being disposed at an acute angle ("ANG") relative to a vertical line 66 extending through the forward mount 58A. The vertical line 66 may also be described as being perpendicular to the engine centerline 30. In this embodiment, the intersection point 68 is disposed at the intersection of the forward mount plane 74 and the thrust link vector extending through the thrust link 62. In this embodiment, the vertical centerline 72 of the FDGS is disposed aft of the intersection point 68. An intersection point 68 utilized in this engine mounting configuration may be evaluated in terms of a parameter "P2" that takes into consideration relevant physical dimensions of the engine 28. The following algorithm is an example of how the parameter P2 may be determined: $P 2 = \left(\frac{B}{\left(A-\left(-E\right)\right)}\right) ∗ \left(\frac{- C}{D}\right)$ The reference letter "P2" refers to the parameter value. Referring to FIG. 6, the reference letter "B" refers to the outer radial diameter of the fan section 36. The reference letter "A" refers to the axial distance between the forward mount 58A and the aft mount 58B. As indicated herein, the specific axial position of the forward mount 58A and the specific axial position of the aft mount 58B used to define the axial distance may be arbitrarily defined; e.g., the axial distance "A" may be between the lines 66, 70 associated with the connection points of the mount 58A, 58B and the engine 28. The reference letter "C" refers to the axial distance between the vertical line 66 extending through the forward mount 58A and the vertical line 72 extending through the CG of the FDGS. This distance may also be referred to as the "FDGS axial distance" and is assigned a negative sign convention. The reference letter "D" refers to the radius of the aft mount 58B; i.e., the radial distance between the engine centerline 30 and the point on the TEC 48 where the aft mount 58B connects with the TEC 48. The reference letter "E" refers to the axial distance between the vertical line 66 extending through the forward mount 58A and the vertical line 76 extending through the intersection point 68; e.g., the "mount-intersection point axial distance value". This distance is assigned a negative sign convention.

Analysis indicates that an intersection point 68 disposed below the axial centerline 30 of the engine 28 that provides desirable loading benefits may have a parameter value "P2" that is less than zero. The analysis also indicates that parameter "P2" values that are in the range of about negative one to about negative four-tenths (i.e., P2 in the range of about -1.0 to about -0.4) provide more appreciable loading benefits, and that intersection points 68 disposed below the axial centerline 30 of the engine 28 provide desirable loading benefits for turbofan engines having an outer radial fan diameter of about one hundred and ten inches (2.79 m) or less, and desirable loading benefits for an FDGS 56 with a gear ratio that is at or above 2.8.

Tilting the forward mount centerline 74 (which is disposed within the forward mount plane) forward is understood to mitigate loading on forward exit guide vanes ("FEGVs 29") by decreasing the angle between the force vectors extending through the FEGVs 29 and the engine mount thrust link vectors. The bending load acting on the engine core is also mitigated in this embodiment as a result of the intersection point 68 being disposed more forwardly, which decreases the moment arm of the fan section CG relative to the intersection point 68 and the moment arm of the FDGS 56 relative to the intersection point 68.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present invention is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the inventions may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the inventions--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present invention are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. An aircraft system, comprising:
a pylon (26);
a gas turbine engine (28) comprising a fan section (36) with a fan case (60) and a turbine exhaust case, TEC (48), wherein the fan case (60) defines a portion of a bypass air path (54), and wherein the gas turbine engine (28) has an axially extending engine centerline (30);
a forward mount (58A) engaged with the fan case (60) and the pylon (26), wherein the forward mount (58A) has a forward mount centerline (74);
an aft mount (58B) engaged with the TEC (48) and the pylon (26); and.
a thrust link (62) extending between the aft mount (58B) and the gas turbine engine (28) along a thrust link centerline (64),
wherein the thrust link (62) is oriented such that a thrust link vector directed along the thrust link centerline (64) intersects with the forward mount centerline (74) at an intersection point (68) that is located below the engine centerline (30).

2. The aircraft system of claim 1, wherein the forward mount (58A) is oriented so that the forward mount centerline (74) extends vertically.

3. The aircraft system of claim 2, wherein the gas turbine engine (28) is a geared turbofan engine that includes a fan drive gear system (56), and wherein, optionally, a center of gravity of the fan drive gear system (56) is located forward of the intersection point (68).

4. The aircraft system of claim 1, wherein the forward mount (58A) is oriented so that the forward mount centerline (74) is tilted by an acute angle relative to a vertical line (66) extending through the forward mount (58A).

5. The aircraft system of claim 4, wherein the gas turbine engine (28) is a geared turbofan engine that includes a fan drive gear system, FDGS (56), and a FDGS centerline (72) is located at or aft of the intersection point (68).

6. The aircraft system of any preceding claim, wherein the fan section (36) has an outer radial fan diameter (B) of about one hundred and ten inches (2.79 m) or less.

7. The aircraft system of any preceding claim, wherein the thrust link (62) extends between the aft mount (58B) and an intermediate case (44) of the gas turbine engine (28).

8. An aircraft system, comprising:
a pylon (26);
a gas turbine engine (28) comprising an axially extending engine centerline (30), a fan section (36), a turbine exhaust case, TEC (48), and a fan drive gear system, FDGS (56), wherein the fan section (36) has a fan case (60) and a fan outer radial diameter value (B);
a forward mount (58A) engaged with the fan case (60) and the pylon (26), wherein the forward mount (58A) has a forward mount plane (74);
an aft mount, AM (58B), engaged with the TEC (48) and the pylon (26), wherein the aft mount (58B) is separated from the engine centerline (30) by an AM radial distance value (D), and wherein the aft mount (58B) is separated from the forward mount (58A) by a mount separation distance value (A);
wherein the FDGS (56) includes a center of gravity, CG, and the FDGS CG is located forward of the forward mount plane (74) by an FDGS axial distance value (C);
a thrust link (62) extending between the aft mount (58B) and the gas turbine engine (28) along a thrust link centerline (64);
wherein the thrust link (62) is orientated such that a thrust link vector directed along the thrust link centerline (64) intersects with the forward mount plane (74) at an intersection point (68); and
wherein the system is configured such that when a parameter value "P" is determined using the mount separation distance value (A), the fan outer radial diameter value (B), the FDGS axial distance value (C), and the AM radial distance value (D), and an expression: $P = \left(\frac{B}{A}\right) ∗ \left(\frac{- C}{D}\right)$
wherein within the expression, "B" represents the fan outer radial diameter value, "A" represents the mount separation distance value, "C" represents the FDGS axial distance value, and "D" represents the AM radial distance value, the determined value for "P" is less than zero.

9. The aircraft system of claim 8, wherein:
the forward mount (58A) is oriented so that the forward mount plane (74) extends vertically; and/or
the fan section (36) has an outer radial fan diameter (B) of about one hundred and ten inches (2.79 m) or less.

10. The aircraft system of claim 8 or 9, wherein:
the intersection point (68) is located below the engine centerline (30); and/or
the intersection point (68) is located aft of the FDGS CG.

11. The aircraft system of any of claims 8 to 10, wherein the determined value for "P" has a value that is in the range of -1.0 to -0.4.

12. An aircraft system, comprising:
a pylon (26);
a gas turbine engine (28) comprising an axially extending engine centerline (30), a fan section (36), a turbine exhaust case, TEC (48), and a fan drive gear system, FDGS (56), wherein the fan section (36) has a fan case (60) and a fan outer radial diameter value (B);
a forward mount (58A) engaged with the fan case (60) and the pylon (26), wherein the forward mount (58A) has a forward mount plane (74) that is tilted from a vertical line (66) that extends through the forward mount (58A) and is perpendicular to the engine centerline (30);
an aft mount, AM (58B), engaged with the TEC (48) and the pylon (26), wherein the aft mount (58B) is separated from the engine centerline (30) by an AM radial distance value (D), and wherein the aft mount (58B) is separated from the forward mount (58A) by a mount separation distance value (A);
wherein the FDGS (56) includes a center of gravity, CG, and the FDGS CG is located forward of the forward mount (58A) by an FDGS axial distance value (C);
a thrust link (62) extending between the aft mount (58B) and the gas turbine engine (28) along a thrust link centerline (64);
wherein the thrust link (62) is orientated such that a thrust link vector directed along the thrust link centerline (64) intersects with the forward mount plane (74) at an intersection point (68); and
wherein a vertical line (76) extending through the intersection point (68) is separated from the vertical line (66) extending through the forward mount (58A) by a mount-intersection point axial distance value (E); and
wherein the system is configured such that when a parameter value "P2" is determined using the mount separation distance value (A), the fan outer radial diameter value (B), the FDGS axial distance value (C), the AM radial distance value (D), the mount-intersection point axial distance value (E) and an expression: $P 2 = \left(\frac{B}{\left(A-\left(-E\right)\right)}\right) ∗ \left(\frac{- C}{D}\right)$
wherein within the expression, "B" represents the fan outer radial diameter value, "A" represents the mount separation distance value, "C" represents the FDGS axial distance value, "D" represents the AM radial distance value, "E" represents the mount-intersection point axial distance value, and the determined value for "P2" is less than zero.

13. The aircraft system of claim 12, wherein:
the intersection point (68) is located below the engine centerline (30); and/or
the intersection point (68) is located forward of the FDGS CG.

14. The aircraft system of claim 12 or 13, wherein the determined value for "P2" has a value that is in the range of -1.0 to -0.4.

15. The aircraft system of any of claims 12 to 14, wherein:
the fan section (36) has an outer radial fan diameter (B) of about one hundred and ten inches (2.79 m) or less; and/or
the FDGS (56) has a gear ratio that is at or above 2.8.
